# EUROPÄISCHE PATENTSCHRIFT

(11) **EP 3 330 110 B1**
(45) Veröffentlichungstag und Bekanntmachung des Hinweises auf die Patenterteilung: **14.04.2021**
(21) Anmeldenummer: 17204333.3
(22) Anmeldetag: 29.11.2017
(51) Int. Cl.: B60G 7/02

(54) **LAGERBOCK ZUR FESTLEGUNG EINES STARRACHSEN-LÄNGSLENKERS MIT BETRIEBSLASTFALL BEEINFLUSSENDEM ANLAGEBAUTEIL**
BEARING BLOCK FOR FIXING A BEAM AXLE LONGITUDINAL ARM WITH COMPONENT AFFECTING OPERATING LOAD CASE
SUPPORT DE PALIER PERMETTANT DE FIXER UN BRAS OSCILLANT LONGITUDINAL À ESSIEUX RIGIDES POURVU DE COMPOSANT D'APPUI INFLUENÇANT LE CAS DE CHARGE DE FONCTIONNEMENT

(30) Priorität: 30.11.2016 DE 102016223861
(43) Veröffentlichungstag der Anmeldung: 06.06.2018
(73) Patentinhaber: JOST-Werke Deutschland GmbH, 63263 Neu-Isenburg (DE)
(72) Erfinder: Leiß, Jan, 48493 Wettringen (DE); Pentin, Paul, Scarborough, YO12 NG (GB)
(74) Vertreter: Ruttensperger Lachnit Trossin Gomoll

(56) Entgegenhaltungen:
- EP-A1- 0 773 119
- WO-A1-2017/198374
- US-A1- 2007 126 263
- US-B1- 6 659 479

## Beschreibung

Die vorliegende Erfindung betrifft einen Lagerbock zur Festlegung eines Starrachsen-Längslenkers an einem Fahrzeugträger, umfassend zwei längs einer Abstandsachse voneinander entfernt gelegene Lagerbockwangen, zwischen welchen eine sich längs der Abstandsachse erstreckende Durchsetzungsformation verläuft, die dazu ausgebildet ist, im fertig montierten Zustand des Lagerbocks ein zwischen den Lagerbockwangen aufgenommenes Befestigungsauge des Starrachsen-Längslenkers zu durchsetzen, wobei die Lagerbockwangen in einem ersten Verbindungsbereich durch eine in einer zur Abstandsachse orthogonalen ersten Richtung von der Durchsetzungsformation entfernt gelegene Rückenformation miteinander verbunden sind, und wobei die Lagerbockwangen in einem vom ersten verschiedenen zweiten Verbindungsbereich durch eine in einer zur Abstandsrichtung orthogonalen und von der ersten Richtung verschiedenen zweiten Richtung von der Durchsetzungsformation entfernt gelegene Verbindungsformation miteinander verbunden sind, wobei ein durch die Lagerbockwangen, die Rückenformation und die Verbindungsformation eingegrenzter und von der Durchsetzungsformation durchsetzter Aufnahmeraum des Lagerbocks zur Einführung des Befestigungsauges von einem sowohl von der Rückenformation als auch von der Verbindungsformation entfernt gelegenen Einführbereich des Lagerbocks her offen ist.

Derartige Lagerböcke sind zur Festlegung von Starrachsen-Längslenkern insbesondere an Lastkraftfahrzeugen allgemein bekannt. Die Lagerbockwangen, die Verbindungsformation und die Rückenformation grenzen dabei den das Befestigungsauge des Längslenkers aufnehmenden Aufnahmeraum ein, wobei das Längsende des Längslenkers formschlüssig am Lagerbock festgelegt ist, indem die Durchsetzungsformation das Befestigungsauge des Längslenkers durchsetzt. Als "Befestigungsauge" soll dabei jede Art von durchsetzter oder durchsetzbarer Formation am freien Ende eines Längslenkers verstanden sein.

Im Fahrbetrieb von mit derartigen Lagerböcken ausgerüsteten Fahrzeugen kommt es beispielsweise bei einer Beschleunigung oder einer Verzögerung des Fahrzeugs zu einer Kraftwirkung orthogonal zur Abstandsachse, da die Abstandsachse üblicherweise in Fahrzeugquerrichtung orientiert verläuft. In bestimmten Fahrsituationen, etwa bei Kurvenfahrt, wird in dem Lagerbock eine längs der Abstandsachse wirkende Kraft eingeleitet, deren Wirkungsrichtung von der jeweiligen Fahrsituation des Fahrzeugs abhängt.

Üblicherweise ist der Lagerbock sowohl im ersten, wie auch im zweiten Verbindungsbereich mit einem Fahrzeugträger des den Lagerbock tragenden Fahrzeugs verbunden, wobei der Lagerbock häufig mit dem zweiten Verbindungsbereich und der dort vorgesehenen Verbindungsformation direkt mit dem Fahrzeugträger verbunden ist, und mit dem ersten Verbindungsbereich und der dort vorgesehenen Rückenformation unter Zwischenanordnung eines Supportbauteils mit dem Fahrzeugträger verbunden ist. Die Rückenformation steht daher in der Regel vom Fahrzeugträger, an dem der Lagerbock mit dem zweiten Verbindungsbereich befestigt ist, ab.

Dadurch kommt es bei der Belastung des Lagerbocks mit einer längs der Abstandsachse wirkenden Kraft zu einer Biegung der Lagerbockwangen relativ zur Rückenformation. Da längs der Abstandsachse auf den Lagerbock einwirkende Betriebskräfte zu etwa gleichen Zeitanteilen in die eine wie in die entgegengesetzte andere Richtung wirken, führt diese Biegebelastung der Lagerbockwangen relativ zur Rückenformation zu einer den Lagerbock mechanisch stark beanspruchenden wechselnden Belastung. Diese wechselnde Belastung wirkt sich üblicherweise nachteilig auf die Standzeit des Lagerbocks aus.

Aus der nachveröffentlichten WO 2017/198374 A1, deren Prioritätstag vor jenem der der vorliegenden Anmeldung liegt, die jedoch erst nach dem Prioritätstag der vorliegenden Anmeldung veröffentlicht wurde und für die die regionale europäische Phase eingeleitet wurde, ist ein Lagerbock bekannt, dessen Abstützbereich nicht bestimmungsgemäß lösbar mit der Rückenformation verbunden ist. Das Dokument US 6,659,479 B1 offenbart einen Lagerbock nach dem Oberbegriff des Anspruchs 1.

Es ist daher Aufgabe der vorliegenden Erfindung, einen Lagerbock der eingangs genannten Art derart weiterzubilden, dass seine Lebensdauer trotz der im Fahrbetrieb unvermeidlich auftretenden längs der Abstandsachse wirkenden Kraftbelastungen verglichen mit einem unveränderten Lagerbock erhöht wird.

Diese Aufgabe wird erfindungsgemäß gelöst durch einen Lagerbock mit allen Merkmalen des Anspruchs 1. Bei diesem Lagerbock ist im Bereich zwischen der Durchsetzungsformation und der

Rückenformation ein Anlagebauteil mit wenigstens einem Anlageabschnitt angeordnet, wobei der wenigstens eine Anlageabschnitt einer Lagerbockwange in einem zur jeweils anderen Lagerbockwange weisenden Wandabschnitt derart unverbunden gegenüberliegt oder an ihr anliegt, dass zwischen Lagerbockwange und Anlageabschnitt mit Wirkung längs der Abstandsachse nur eine Druckkraft übertragbar ist.

Durch Anordnen des Anlagebauteils kann sich eine Lagerbockwange im Falle eines Auftretens einer längs der Abstandsachse wirkenden Kraftbelastung in einer Kraftwirkungsrichtung an dem Anlageabschnitt abstützen, wodurch die Belastungssituation dieser Lagerbockwange insgesamt durch wenigstens zwei Effekte vorteilhaft verändert wird:
Bei einer Kraftbelastung, welche zu einer Biegung von der jeweils anderen Lagerbockwange weg führt, ändert sich an der Biegesituation der Lagerbockwange relativ zur Rückenformation, verglichen mit dem Stand der Technik ohne Anlagebauteil, nichts. Die Kraftbelastung bewirkt eine Biegebelastung um eine "natürliche", also im Wesentlichen allein durch die Konstruktion der Lagerbockwange und der Rückenformation bewirkte Biegeachse.

Bei einer Kraftbelastung, die eine Biegebelastung zur jeweils anderen Lagerbockwange hin bewirkt, bleibt oder gelangt die belastete Lagerbockwange in Anlage an den Anlageabschnitt und wird folglich vom Anlagebauteil abgestützt.

Dadurch erfolgt die Biegung der Lagerbockwange relativ zur Rückenformation nicht um die "natürliche" Biegeachse des Lagerbocks, sondern um eine durch die Anlagesituation am Anlageabschnitt definierte Biegeachse. Abhängig von der Wirkungsrichtung der längs der Abstandsachse wirkenden Kraft erfolgen Biegebelastungen der Lagerbockwange relativ zur Rückenformation daher um unterschiedliche und zueinander versetzte Biegeachsen.

Außerdem ist der Abstand der die Biegebelastung bewirkenden Kraft von der durch den Anlageabschnitt definierten Biegeachse geringer als der Abstand zur "natürlichen" Biegeachse des Lagerbocks. Somit ist das aus diesem Abstand bzw. Lastarm resultierende Biegemoment geringer.

Im Ergebnis tritt damit an der Lagerbockwange bzw. in einem Bereich eines Übergangs von der Lagerbockwange zur Rückenformation nach wie vor eine kraftinduzierte Biegewirkung auf, jedoch tritt diese Biegewirkung nicht mehr wechselnd, sondern schwellend auf, und zwar einmal um die "natürliche" Biegeachse zwischen Lagerbockwange und Rückenformation in der einen Kraftwirkungsrichtung und um die durch den Anlageabschnitt definierte örtlich versetzte weitere Biegeachse bei entgegengesetzt wirkender Kraftbelastung.

Durch das erfindungsgemäß vorgeschlagene Anlagebauteil wird daher die an einem Ort oder in einem Wirkbereich ursprünglich auftretende nachteilige wechselnde Belastung des Lagerbocks bzw. der Lagerbockwange in zwei an unterschiedlichen Orten oder Wirkbereichen wirkende schwellende Belastungen aufgeteilt.

Zwar ist die aus der unveränderten Fahrsituation resultierende Kraftbelastung unverändert. Ihre Wirkung auf den Lagerbock und seine Lagerbockwange als Bauteil ist durch die vorgeschlagene Maßnahme jedoch abgemildert, da die Bauteilbelastung über einen größeren Bauteilbereich verteilt in das Bauteil eingeleitet werden kann und die Belastungsart (schwellend statt wechselnd) weniger nachteilige Auswirkungen auf die Bauteillebensdauer hat bzw. die Bauteilfestigkeit für schwellende Biegebelastung höher ist als für wechselnde. Daher kann zwischen der Lagerbockwange und dem Anlageabschnitt zwar in einer Belastungsrichtung eine Druckkraft übertragen werden, bei Belastung in der entgegengesetzten Wirkungsrichtung ist jedoch wegen des Umstands, dass der Anlageabschnitt nicht mit der mit ihm zusammenwirkenden Lagerbockwange verbunden ist, keine Zugkraft übertragbar. Bei einer theoretisch ausreichend weit verformbaren Lagerbockwange wäre diese theoretisch vom Anlageabschnitt abhebbar.

Zur Erzielung der vorteilhaften Wirkung der vorliegend vorgeschlagenen Ausgestaltung reicht es aus, wenn der Anlageabschnitt der mit ihm zusammenwirkenden Lagerbockwange mit einem geringen Spaltabstand gegenüberliegt. Der Spaltabstand muss lediglich so gering bemessen sein, dass es bei einer betriebsmäßig auftretenden Kraftbelastung längs der Abstandsachse infolge einer durch die Kraftbelastung induzierten Verformung zu einer Anlage der Lagerbockwange am Anlageabschnitt kommt. Bevorzugt liegt die Lagerbockwange dauerhaft an dem Anlageabschnitt an, also bereits bei stillstehendem Fahrzeug oder sogar bereits bei noch nicht im Aufnahmeraum aufgenommenem Befestigungsauge des Starrachsen-Längslenkers. In vorteilhafter Weise kann die Lagerbockwange mit einer zum Anlagebauteil hin wirkenden Vorspannkraft an dieser anliegen. Die Vorspannkraft kann aus der Materialelastizität der Lagerbockwange selbst bewirkt werden, beispielsweise durch geringfügige Auslenkung der Lagerbockwange gegen ihre gestalt- und materialbedingte Elastizität zur gegenüberliegenden Lagerbockwange hin.

Um eine möglichst eindeutig definierte Biegeachse durch den Anlageabschnitt bei gleichzeitig nicht übermäßig ansteigender lokalen Materialbelastung bereitstellen zu können, ist der Anlageabschnitt bevorzugt geradlinig ausgebildet oder/und verläuft mit Abstand von der Rückenformation entlang derselben. Der Abstand des Anlageabschnitts von der Rückenformation sollte dabei so groß gewählt sein, dass die durch den Anlageabschnitt definierte Biegeachse sich örtlich eindeutig von der "natürlichen" Biegeachse der Lagerbockwange unterscheidet und sollte so nahe an der Rückenformation vorgesehen sein, dass der Aufnahmeraum durch die Anordnung des Anlagebauteils nicht so stark verkleinert wird, dass Probleme bei der Aufnahme des Befestigungsauges des Starrachsen-Längslenkers darin entstehen.

Bevorzugt verläuft der wenigstens eine Anlageabschnitt parallel zur Rückenformation, so dass die vom Anlagelabschnitt definierte Biegeachse parallel zur "natürlichen" Biegeachse der Lagerbockwange und mit Abstand von dieser verlaufend erwartet werden kann.

Grundsätzlich kann der Anlageabschnitt durch beliebige Anlageformationen, wie etwa auskragende Vorsprünge und dergleichen, gebildet sein. Ein wirksamer Anlageabschnitt bei gleichzeitig steifem und wenig Bauraum forderndem Anlagebauteil kann dadurch erhalten werden, dass der wenigstens eine Anlageabschnitt einen Randabschnitt des Anlagebauteils bildet.

Die Bauraumanforderung des Anlagebauteils kann außerdem dadurch vorteilhaft in Grenzen gehalten werden, dass wenigstens ein den Anlageabschnitt aufweisender Abstützbereich des Anlagebauteils flächig ausgebildet ist. Besonders bevorzugt ist das gesamte Anlagebauteil flächig ausgebildet. Da es zur Wirksamkeit des Anlageabschnitts in dem oben genannten Sinne auf die Steifigkeit, insbesondere auf die Druck- und Biegesteifigkeit, wenigstens des Abstützbereichs ankommt, ist dieser besonders bevorzugt eben ausgebildet, wobei der Abstützbereich dann aus Gründen einer möglichst hohen Biegesteifigkeit mit seiner Haupterstreckungsebene in Richtung der Abstandsachse verlaufend angeordnet ist.

Ein solches Anlagebauteil kann bevorzugt als flächiges Blechbauteil bereitgestellt sein. Dieses ist durch Stanzen und Umformen einfach und kostengünstig herstellbar.

Um den Abstützbereich des Anlagebauteils, also jenen Bereich des Anlagebauteils, welcher den Anlageabschnitt aufweist bzw. an welchem der Anlageabschnitt ausgebildet ist, definiert in Bezug zur Rückenformation am Lagerbock anordnen zu können, ist bevorzugt der Abstützbereich längs der Rückenformation mit Abstand von dieser angeordnet.

Es sei ausdrücklich darauf hingewiesen, dass das Anlagebauteil nur aus dem Abstützbereich bestehen kann.

Im Zweifel soll als Abstützbereich wenigstens jener Bereich angesehen werden, welcher den Anlageabschnitt als Randabschnitt aufweist und welcher sich vom Anlageabschnitt ausgehend längs der Abstandsachse erstreckt.

Das Anlagebauteil oder wenigstens dessen Abstützbereich ist mit der Rückenformation verbunden, um eine Relativposition und Relativlage des Abstützbereichs relativ zur Rückenformation und damit eine Relativlage der relevanten Biegeachsen im oben bezeichneten axialen (bezogen auf die Abstandsachse) Belastungsfall möglichst dauerhaft zu definieren. Aus Gründen leichter Wartung und Reparatur ist der Abstützbereich erfindungsgemäß bestimmungsgemäß lösbar mit der Rückenformation verbunden, beispielsweise durch Verschrauben. Als "bestimmungsgemäß lösbar" ist eine Verbindung dann zu verstehen, wenn sie gelöst werden kann, ohne dass ein an ihr beteiligtes Bauteil hierfür zerstört werden muss.

Die Verbindungsformation kann ein Bauteil aufweisen, welches im zweiten Verbindungsbereich, längs der Abstandsachse verlaufend, den zwischen den beiden Lagerbockwangen gebildeten Spalt überbrückend mit beiden Lagerbockwangen verbunden sein kann, insbesondere bestimmungsgemäß unlösbar verbunden sein kann, beispielsweise durch Verschweißen. Zur Erhöhung der Steifigkeit des Lagerbocks kann dieses zur Verbindungsformation beitragende, ursprünglich gesondert vorliegende Bauteil gekröpft, insbesondere zur Durchsetzungsformation hin gekröpft ausgebildet sein und längs des gekröpften Bauteilrandes zu beiden Seiten des Bauteils mit je einer Lagerbockwange verbunden sein.

Zur Verminderung der zur Bildung des hier diskutierten Lagerbocks benötigten Anzahl an Bauteilen kann das gerade beschriebene, zur Verbindungsformation beitragende Bauteil einstückig mit dem Anlagebauteil ausgebildet sein. Dann kann das Anlagebauteil einen Festlegebereich aufweisen, welcher mit dem Abstützbereich - bevorzugt einstückig - verbunden, jedoch von diesem entfernt gelegen ist. Der Festlegebereich kann dann in einem von der Rückenformation entfernt gelegenen Bereich, vorzugsweise im Verbindungsbereich oder wenigstens in einem der Verbindungsformation näher als der Rückenformation gelegenen Bereich, des Lagerbocks mit dem übrigen Lagerbock, etwa mit den Lagerbockwangen, verbunden sein. Der Festlegebereich kann in der oben im Zusammenhang mit dem Bauteil beschriebenen Art und Weise zur Bildung der Verbindungsformation beitragen und kann die ebenfalls beschriebene gekröpfte Konfiguration aufweisen.

Zur Vermeidung von im Betrieb stoßartig auftretenden Spitzenbelastungen kann vorgesehen sein, dass der den Anlageabschnitt aufweisende Abstützbereich des Anlagebauteils längs der Abstandsachse federnd ausgebildet ist. Hierzu kann gemäß einer konstruktiv bevorzugten Ausgestaltung des Anlagebauteils bzw. des Abstützbereichs das Anlagebauteil bzw. der Abstützbereich eine längs der Abstandsachse verlaufende Basis aufweisen, von welcher ein den Anlageabschnitt aufweisender Schenkel absteht. Dabei hat es sich für die resultierende Belastungssituation als vorteilhaft erwiesen, wenn die längs der Abstandsachse verlaufende Basis weiter von der Verbindungsformation entfernt gelegen ist als der von ihr abstehende wenigstens eine Schenkel. Die Basis kann beispielsweise einen von der Verbindungsformation fern liegenden Randabschnitt des Anlagebauteils bilden. Von der Basis kann dann der wenigstens eine Schenkel parallel zur Rückenformation und bevorzugt unter Annäherung an die Verbindungsformation von der Basis abstehen.

Bevorzugt ist vorgesehen, dass das Anlagebauteil zwei längs der Abstandsachse in entgegengesetzte Richtungen weisende Anlageabschnitte aufweist, von welchen jeder einer anderen Lagerbockwange gegenüberliegt oder an dieser anliegt. In diesem Fall können für beide Lagerbockwangen eines Lagerbocks die oben beschriebenen vorteilhaften Wirkungen erzielt werden. Das oben zu dem wenigstens einen Anlageabschnitt Gesagte gilt auch für den weiteren Anlageabschnitt des Anlagebauteils. Daher ist weiter bevorzugt, dass von der längs der Abstandsachse verlaufenden Basis zwei längs der Abstandsachse mit Abstand voneinander angeordnete Schenkel abstehen. Von diesen Schenkeln kann jeder einen Anlageabschnitt aufweisen, wobei dann jeder Anlageabschnitt einer anderen Lagerbockwange gegenüberliegt oder an dieser anliegt.

Zur Erleichterung von Fertigung und Montage des Lagerbocks ist es bevorzugt, wenn der Abstützbereich, vorzugsweise das Anlagebauteil, besonders bevorzugt der Lagerbock bezüglich einer zur Abstandsachse orthogonalen Symmetrieebene spiegelsymmetrisch ausgebildet ist.

Ein einerseits ausreichend steifer Lagerbock bei gleichzeitig einfacher Einführbarkeit des Starrachsen-Längsendes in den vom Lagerbock bereitgestellten Aufnahmeraum kann dadurch erhalten werden, dass sowohl der erste als auch der zweite Verbindungsbereich wenigstens abschnittsweise in jeweils einer Ebene gelegen sind, wobei die beiden Ebenen einen Winkel von 75° bis 110°, vorzugsweise von 85° bis 105°, besonders bevorzugt von etwa 90° einschließen.

Da der Lagerbock der vorliegenden Anmeldung bestimmungsgemäß mit einem Fahrzeugträger eines den Lagerbock tragenden Fahrzeugs, insbesondere Lastkraftwagens, verbunden ist, betrifft die vorliegende Erfindung ebenfalls eine Lagerungsstruktur mit einem Lagerbock, wie er oben beschrieben und weitergebildet ist, und mit einem Fahrzeugträger, wobei der Lagerbock im ersten und im zweiten Verbindungsbereich jeweils mit dem Fahrzeugträger verbunden ist.

Der Fahrzeugträger kann dabei Teil der Verbindungsformation sein, beispielsweise indem die Lagerbockwangen und ggf. das zwischen ihnen angeordnete Bauteil oder der zwischen ihnen angeordnete Festlegebereich des Anlagebauteils, unmittelbar mit dem Fahrzeugträger verbunden sind, bevorzugt bestimmungsgemäß unlösbar verbunden, etwa durch Verschweißen. Hierdurch wird eine hochfeste und in Abhängigkeit von der Ausgestaltung der Schweißnaht auch großflächige Verbindung des Lagerbocks mit dem Fahrzeugträger geschaffen.

Alternativ kann der Lagerbock mit einer gesondert vom Fahrzeugträger ausgebildeten Verbindungsformation mit diesem verbunden sein. Ebenso kann der Lagerbock unter Zwischenanordnung von wenigstens einem Zwischenbauteil mit dem Fahrzeugträger verbunden sein. Beispielsweise kann der Lagerbock mit einer Lochplatte verschweißt sein, die wiederum an den Fahrzeugträger angeschraubt ist.

Im Vergleich zur Verbindungsformation kann die Rückenformation unter Zwischenanordnung eines gesonderten Supportbauteils mit dem Fahrzeugträger verbunden sein. Das Supportbauteil ist dazu einenends mit der Rückenformation und andernends mit dem Fahrzeugträger oder einem mit dem Fahrzeugträger fest verbundenen Bauteil verbunden. In vorteilhafter Weiterbildung der oben beschriebenen Verbindung des Abstützbereichs bzw. des Anlagebauteils mit der Rückenformation kann im Zusammenhang mit der Lagerungsstruktur vorgesehen sein, dass die Rückenformation und der Abstützbereich des Anlagebauteils durch gemeinsame Verbindungsmittel, insbesondere Schrauben oder Niete, mit dem Supportbauteil verbunden sind.

Die vorliegende Erfindung wird nachfolgend anhand der beiliegenden Zeichnungen näher erläutert werden. Es stellt dar:
- Fig. 1: eine perspektivische Explosionsdarstellung einer erfindungsgemäßen Ausführungsform des Lagerbocks und der Lagerungsstruktur der vorliegenden Erfindung,
- Fig. 2: der Lagerbock und die Lagerungsstruktur von Fig. 1 in perspektivischer Ansicht im montierten Zustand und
- Fig. 3: eine Teilansicht des die Rückenformation und das Anlagebauteil umfassenden Bereichs des Lagerbocks und der Lagerungsstruktur von Fig. 2 längs der Richtung des Pfeils III in Fig. 2.

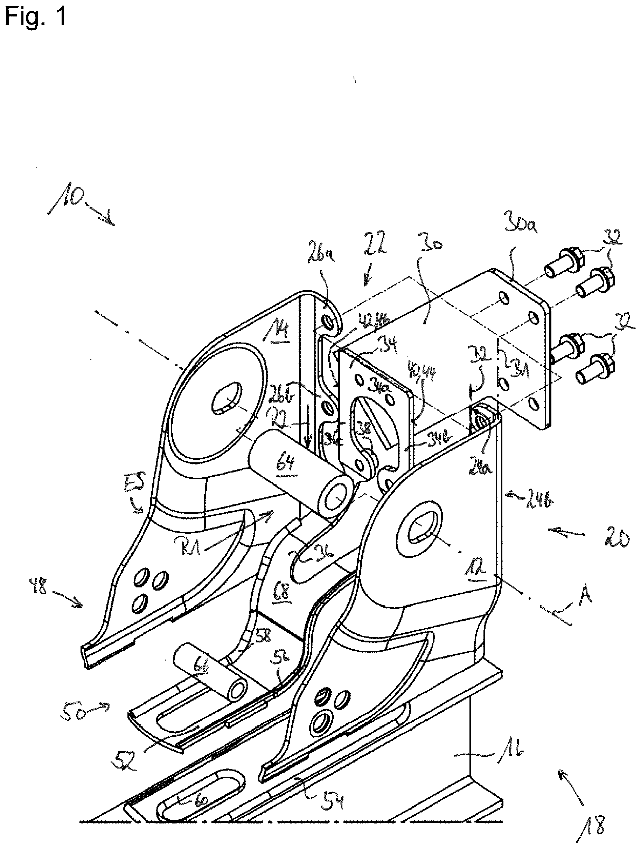

In den Fig. 1 bis 3 ist eine erfindungsgemäße Ausführungsform eines Lagerbocks der vorliegenden Anmeldung allgemein mit 10 bezeichnet.

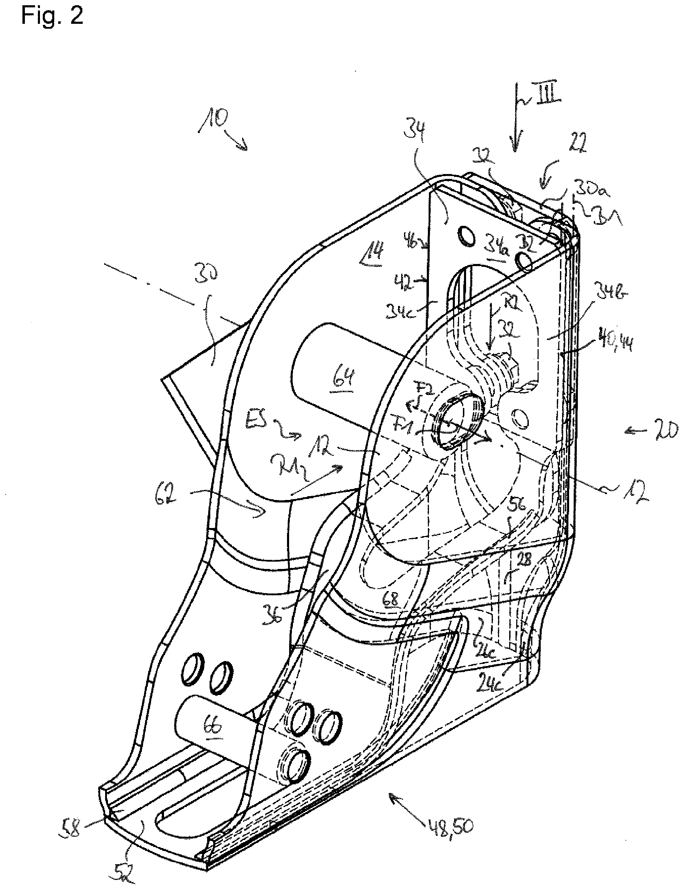

Der Lagerbock 10 weist eine erste Lagerbockwange 12 und eine längs einer Abstandsachse A von dieser mit Abstand vorgesehene zweite Lagerbockwange 14 auf. Die erste Lagerbockwange 12 ist in Fig. 2 durchscheinend dargestellt, um die dahinter liegenden Bauteile und Bauteilabschnitte beschreiben zu können.

Der Lagerbock 10 ist mit einem in Fig. 1 dargestellten Doppel-T-Fahrzeugträger 16 verbunden und bildet mit diesem eine Lagerungsstruktur 18. Der Fahrzeugträger 16 kann beispielsweise Teil eines Fahrzeugrahmens sein.

Die beiden Lagerbockwangen 12 und 14 sind in einem ersten, im dargestellten Beispiel vom Fahrzeugträger 16 abstehenden, Verbindungsbereich 20 durch eine Rückenformation 22 verbunden. Die Rückenformation 22 umfasst im dargestellten Beispiel integral mit der ersten Lagerbockwange 12 ausgebildete und von dieser in Richtung zur zweiten Lagerbockwange 14 abstehende Verbindungslaschen 24a und 24b (die Lasche 24b ist in den Figuren nicht erkennbar) sowie integral mit der zweiten Lagerbockwange 14 ausgebildete und von dieser zur ersten Lagerbockwange 12 hin abstehende Verbindungslaschen 26a und 26b.

Außerdem umfasst die Rückenformation 22 in einem näher beim Fahrzeugträger 16 gelegenen und im dargestellten Beispiel bis zu diesem reichenden Bereich Laschen 24c und 26c, welche ebenfalls integral mit den Lagerbockwangen 12 bzw. 14 ausgebildet sind und welche von der sie aufweisenden Lagerbockwange 12 bzw. 14 zur jeweils anderen Lagerbockwange 14 bzw. 16 hin vorstehen. Die Verbindungslaschen 24c und 26c sind durch eine Schweißnaht 28 miteinander bestimmungsgemäß unlösbar verbunden.

Zu der Rückenformation 20 trägt weiter bei ein Supportbauteil 30, welches an seinem einen Längsende 30a mittels vier im Wesentlichen identischen Verbindungsschrauben 32 sowohl mit den Verbindungslaschen 24a und 24b als auch mit den Verbindungslaschen 26a und 26b verbunden ist. Mit seinem in den Figuren nicht dargestelltem anderen Längsende ist das Supportbauteil 30 mit einem fest mit dem Fahrzeugträger 16 verbundenen Bauteil verbunden.

Zwei Verbindungsschrauben 32 durchsetzen das Längsende 30a des Supportbauteils 30 und die Verbindungslaschen 24a, 24b, 26a und 26b und sind in fest mit einem Abstützbereich 34 eines Anlagebauteils 36 verbundene Gewindebuchsen 38 eingedreht.

Der im Wesentlichen ebene und durch die Gewindebuchsen 38 in definiertem und konstantem Abstand zur Rückenformation 22 angeordnete Abstützbereich 34 weist an seinen beiden zu den jeweiligen Lagerbockwangen 12 und 14 hinweisenden Randabschnitten 40 und 42 Anlageabschnitte 44 bzw. 46 auf, welche im dargestellten Beispiel unter Vorspannung längs der Abstandsachse A an einer Lagerbockwange 12 bzw. 14 anliegen.

Der Abstützbereich 34 weist eine längs der Abstandsachse A verlaufende Basis 34a auf, welche ein vom Fahrzeugträger 16 fern liegendes Ende des Anlagebauteils 16 und dessen Abstützbereichs 34 bildet. Von der Basis 34a steht ein der Lagerbockwange 12 näher gelegener Schenkel 34b und längs der Abstandsachse mit Abstand von diesem ein der Lagerbockwange 14 näher gelegener Schenkel 34c ab. Der Anlageabschnitt 44 ist dabei am Schenkel 34b und der Anlageabschnitt 46 am Schenkel 34c ausgebildet.

Die beiden Lagerbockwangen 12 und 14 sind außerdem in einem zweiten Verbindungsbereich 48 durch eine Verbindungsformation 50 miteinander verbunden. Zu dieser Verbindungsformation 50 trägt ein im dargestellten Beispiel einstückig mit dem Abstützbereich 34 verbundener Festlegebereich 52 des Anlagebauteils 36 bei und trägt überdies der Fahrzeugträger 16 bei, der durch eine Schweißnaht 54 sowohl mit den beiden Lagerbockwangen 12 und 14 als auch mit dem Festlegebereich 52 des Anlagebauteils 36 verbunden ist.

Überdies ist der Festlegebereich 52 durch Schweißnähte 56 und 58 mit der Lagerbockwange 12 bzw. der Lagerbockwange 14 verbunden. Durch eine Schweißnaht 60 ist überdies der Festlegebereich 52 unmittelbar ebenfalls mit dem Fahrzeugträger 16 verbunden.

Die Rückenformation 22 und die Verbindungsformation 50, welche als jeweils ebene Formationen im dargestellten Beispiel etwa einen rechten Winkel zwischen sich einschließen, grenzen zusammen mit den Lagerbockwangen 12 und 14 einen Aufnahmeraum 62 ein, in welchem im fertig montierten Zustand ein Befestigungslängsende eines Starrachsen-Längslenkers angeordnet ist. Der Aufnahmeraum 62 ist von einer Durchsetzungsformation 64 in Form einer Hülse durchsetzt, die durch in den Fig. 1 bis 3 nicht dargestellte Schrauben-Mutter-Kombinationen an den beiden Lagerbockwangen 12 und 14 festgelegt werden kann. Die Schraube der Schrauben-Mutter-Kombination durchsetzt dabei die Hülse 64 und beide in den Lagerbockwangen 12 und 14 zur Befestigung der Hülse 64 vorgesehene Öffnungen. Bevorzugt ist die Hülse 64 in Richtung längs der Abstandsachse A geringfügig kürzer ausgebildet als der Abstand zwischen den Randabschnitten 40 und 42 des Abstützbereichs 34, so dass bei fertig an den Lagerbockwangen 12 und 14 befestigter Hülse 64 aufgrund der gestalt- und materialabhängigen Elastizität des Lagerbocks 10 die von den Randabschnitten 40 bzw. 42 gebildeten Anlageabschnitte 44 bzw. 46 unter Vorspannung längs der Abstandsachse A an den Lagerbockwangen 12 bzw. 14 anliegend.

Der Aufnahmeraum 62 ist von einer Einführseite ES her zugänglich, um von der Einführseite mit dem Längsende eines Starr-achsen-Längslenkers die Durchsetzungsformation 64 erreichen zu können.

Die Rückenformation 22 ist von der Durchsetzungsformation 64 in einer ersten Richtung R1 mit Abstand angeordnet. Die Verbindungsformation 50 ist von der Durchsetzungsformation 64 in einer zweiten Richtung R2 mit Abstand angeordnet. Beide Richtungen R1 und R2 sind orthogonal zur Abstandsachse A orientiert und schließen einen etwa rechten Winkel zwischen sich ein.

Eine weitere Hülse 66 durchsetzt den Aufnahmeraum 62 parallel zu der die Durchsetzungsformation bildenden Hülse 64 in einem Bereich des Aufnahmeraums 62, welcher näher am zweiten Verbindungsbereich 48 und weiter vom ersten Verbindungsbereich 20 entfernt gelegen ist.

Die Anlageabschnitte 44 und 46 des Abstützbereichs 34 liegen an ihren zugeordneten Lagerbockwangen 12 und 14 ohne weitere Verbindung an, so dass zwischen den Anlageabschnitten 44 und 46 und den ihnen jeweils zugeordneten Lagerbockwangen 12 bzw. 14 in Richtung längs der Abstandsachse A ausschließlich Druckkräfte übertragen werden können.

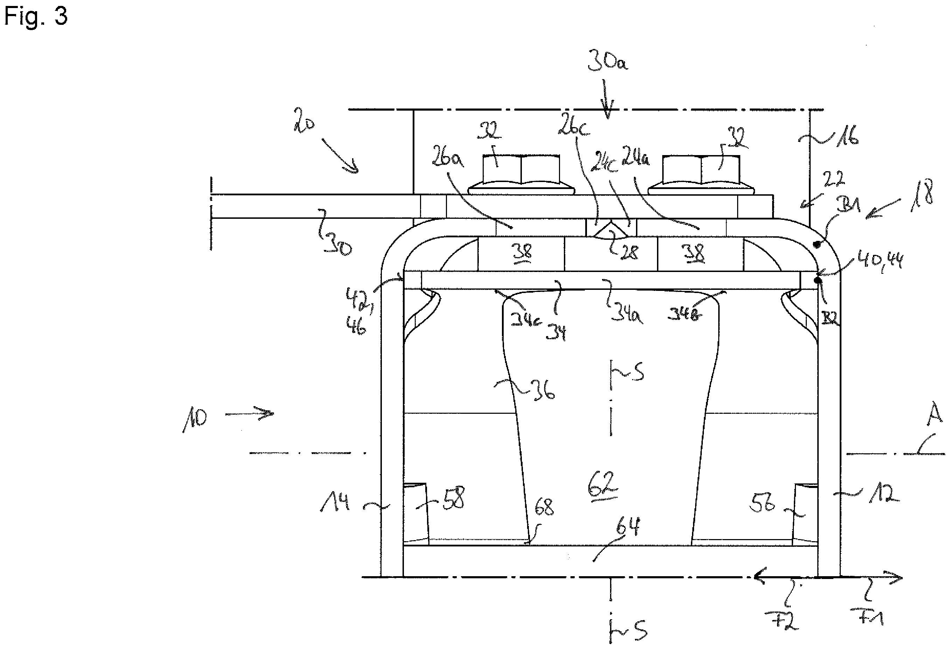

Der Lagerbock 50 ist bevorzugt bezüglich einer zur Richtung der Abstandsachse A orthogonalen, den Aufnahmeraum 62 mittig durchsetzenden Symmetrieebene S (siehe Fig. 3) spiegelsymmetrisch ausgebildet, weshalb die nachfolgende Erläuterung der Wirkung der Anlageabschnitte 44 und 46 lediglich für den Anlageabschnitt 44 im Zusammenwirken mit der Lagerbockwange 12 angegeben wird. Die Wirkung des Anlageabschnitts 44 gilt unter der genannten Spiegelsymmetriebedingung für den Anlageabschnitt 46 und die mit diesem zusammenwirkende Lagerbockwange 14 entsprechend.

Wird aufgrund von im Fahrbetrieb des den Fahrzeugträger 16 aufweisenden Fahrzeugs eine parallel zur Abstandsachse A in Richtung von der Lagerbockwange 14 weg zur Lagerbockwange 12 hin wirkende Kraft F1 auf die Lagerbockwange 12 ausgeübt, so bewirkt diese Betriebskraft F1 eine Biegung der Lagerbockwange 12 relativ zur Rückenformation 22 um eine "natürliche" Biegeachse B1 zwischen Lagerbockwange 12 und Rückenformation 22, welche etwa die die Verbindungslaschen 24a bis 24c mit der Lagerbockwange 12 verbindende Bauteilkrümmung durchsetzt. Die Biegeachse B1 ist in Fig. 3 orthogonal zur Zeichenebene orientiert.

Da die Lagerbockwange 12 und der Anlageabschnitt 44 des Abstützbereichs 34 lediglich unverbunden aneinander anliegen, behindert der Anlageeingriff des Anlageabschnitts 44 mit der Lagerbockwange 12 eine durch die Kraft F1 bewirkte Biegung der Lagerbockwange 12 um die Biegeachse B1 nicht.

Wirkt aufgrund einer gleichartigen, jedoch entgegengesetzt gerichteten Betriebssituation eine Betriebskraft F2 auf die Lagerbockwange 12, wobei die Betriebskraft F2 wiederum parallel zur Abstandsachse A, jedoch in die entgegengesetzte Richtung wie die Kraft F1 wirkt, so bewirkt die Betriebskraft F2 wiederum eine Biegung der Lagerbockwange 12, jedoch diesmal im entgegengesetzten Biegesinn. Aufgrund des Anlageeingriffs des Anlageabschnitts 44 mit der Lagerbockwange 12 erfolgt diese durch die Kraft F2 bewirkte Biegung nicht um die natürliche Biegeachse B1 des aus der Lagerbockwange 12 und den Verbindungslaschen 24a, 24b und 24c gebildeten Bauteils, sondern erfolgt um eine durch den Anlageeingriff des Anlageabschnitts 44 mit der Lagerbockwange 12 bewirkte Biegeachse B2, welche als im Wesentlichen längs der Anlagefläche zwischen dem Anlageabschnitt 44 und der Lagerbockwange 12 verlaufend gedacht werden kann. Die Biegeachsen B1 und B2 sind aufgrund der Ausgestaltung des Lagerbocks 50 und insbesondere des zur Rückenformation 22 im Wesentlichen parallel verlaufenden Abstützbereichs 34 im Wesentlichen parallel, wobei die Biegeachse B2 aufgrund der Anlagesituation zwischen Abstützbereich 34 und Lagerbockwange 12 näher bei der Durchsetzungsformation (Hülse) 64 gelegen ist als die Biegeachse B1.

Wäre der Abstützbereich 34 nicht vorhanden, würden die entgegengesetzt gerichteten Betriebskräfte F1 und F2 jeweils eine Biegung der Lagerbockwange 12 relativ zur Rückenformation 22 um die Biegeachse B1 bewirken, so dass im Bereich der Biegeachse B1 das Bauteil wechselnd belastet wäre.

Durch das Vorsehen des Anlageeingriffs zwischen dem Abstützbereich 34 und der Lagerbockwange 12 kommt es aufgrund der nach wie vor auftretenden entgegengesetzt gerichteten Betriebskräfte F1 und F2 zu Biegebelastungen der Lagerbockwange 12 relativ zur Rückenformation 22, jedoch nun jeweils in entgegengesetzte Richtung schwellend einmal für den ersten Biegesinn um die Biegeachse B1 und einmal für den entgegengesetzten zweiten Biegesinn um die Biegeachse B2.

Da Bauteile eine höhere Schwellbelastungsfestigkeit aufweisen als Wechselbelastungsfestigkeit, kann durch das Vorsehen des Anlageabschnitts 44 in der oben beschriebenen Weise bei unveränderten äußeren Belastungsbedingungen die Auswirkungen dieser Belastungssituation auf die Lebensdauer des Lagerbocks erheblich verringert werden.

Da die Biegewirkung der betriebsmäßig auftretenden Kräfte F1 und F2 umso größer ist, je weiter entfernt vom zweiten Verbindungsbereich 48 man die Lagerbockwangen 12 und 14 betrachtet, sind bevorzugt die Anlageabschnitte 44 und 46 bevorzugt mit Abstand vom zweiten Verbindungsbereich 48 vorgesehen.

Wie in den Fig. 1 und 2 zu erkennen ist, weist das Anlagebauteil 36 zwischen dem Abstützbereich 34 und dem relativ zu diesem etwa um 90° um eine Parallele zur Abstandsachse A verdreht orientierten Festlegebereich 52 einen gekröpften Bereich 68 auf. Der gekröpfte Bereich 68, der ebenfalls über die Schweißnähte 56 und 58 mit den Lagerbockwangen 12 und 14 verbunden ist, wirkt zusätzlich steifigkeitserhöhend am Lagerbock 10.

## Patentansprüche

1. Lagerbock (10) zur Festlegung eines Starrachsen-Längslenkers an einem Fahrzeugträger (16), umfassend zwei längs einer Abstandsachse (A) voneinander entfernt gelegene Lagerbockwangen (12, 14), zwischen welchen eine sich längs der Abstandsachse (A) erstreckende Durchsetzungsformation (64) verläuft, die dazu ausgebildet ist, im fertig montierten Zustand des Lagerbocks (10) ein zwischen den Lagerbockwangen (12, 14) aufgenommenes Befestigungsauge des Starrachsen-Längslenkers zu durchsetzen, wobei die Lagerbockwangen (12, 14) in einem ersten Verbindungsbereich (20) durch eine in einer zur Abstandsachse (A) orthogonalen ersten Richtung (R1) von der Durchsetzungsformation (64) entfernt gelegene Rückenformation (22) miteinander verbunden sind, und wobei die Lagerbockwangen (12, 14) in einem vom ersten verschiedenen zweiten Verbindungsbereich (48) durch eine in einer zur Abstandsrichtung (A) orthogonalen und von der ersten Richtung (R1) verschiedenen zweiten Richtung (R2) von der Durchsetzungsformation (64) entfernt gelegene Verbindungsformation (50) miteinander verbunden sind, wobei ein durch die Lagerbockwangen (12, 14), die Rückenformation (22) und die Verbindungsformation (50) eingegrenzter und von der Durchsetzungsformation (64) durchsetzter Aufnahmeraum (62) des Lagerbocks (10) zur Einführung des Befestigungsauges von einem sowohl von der Rückenformation (22) als auch von der Verbindungsformation (50) entfernt gelegenen Einführbereich des Lagerbocks (10) her offen ist,
**dadurch gekennzeichnet, dass** im Bereich zwischen der Durchsetzungsformation (64) und der Rückenformation (22) ein Anlagebauteil (36) mit wenigstens einem Anlageabschnitt (44, 46) angeordnet ist, wobei der wenigstens eine Anlageabschnitt (44, 46) einer Lagerbockwange (12 oder 14) in einem zur jeweils anderen Lagerbockwange (14 oder 12) weisenden Wandabschnitt derart unverbunden gegenüberliegt oder an ihr anliegt, dass zwischen Lagerbockwange (12, 14) und Anlageabschnitt (44, 46) mit Wirkung längs der Abstandsachse (A) nur eine Druckkraft übertragbar ist, wobei ein den Anlageabschnitt (44, 46) aufweisender Abstützbereich (34) des Anlagebauteils (36) mit der Rückenformation (22) bestimmungsgemäß lösbar verbunden ist.

2. Lagerbock (10) nach Anspruch 1,
**dadurch gekennzeichnet, dass** der wenigstens eine Anlageabschnitt (44, 46) parallel zur Rückenformation (22) verläuft

3. Lagerbock (10) nach Anspruch 1 oder 2,
**dadurch gekennzeichnet, dass** der wenigstens eine Anlageabschnitt (44, 46) einen Randabschnitt (40, 42) des Anlagebauteils (36) bildet.

4. Lagerbock (10) nach einem der vorhergehenden Ansprüche,
**dadurch gekennzeichnet, dass** wenigstens ein den Anlageabschnitt (44, 46) aufweisender Abstützbereich (34) des Anlagebauteils (36) flächig, insbesondere eben ausgebildet ist, bevorzugt ein flächiges Blechbauteil ist.

5. Lagerbock (10) nach einem der vorhergehenden Ansprüche,
**dadurch gekennzeichnet, dass** ein den Anlageabschnitt (44, 46) aufweisender Abstützbereich (34) des Anlagebauteils (36) längs der Rückenformation (22) mit Abstand von dieser angeordnet ist.

6. Lagerbock (10) nach einem der vorhergehenden Ansprüche,
**dadurch gekennzeichnet, dass** der den Anlageabschnitt (44, 46) aufweisende Abstützbereich (34) des Anlagebauteils (36) mit der Rückenformation (22) durch Verschrauben verbunden ist.

7. Lagerbock (10) nach Anspruch 6,
**dadurch gekennzeichnet, dass** ein Festlegebereich (52) des Anlagebauteils (36), welcher mit dem Abstützbereich (34), bevorzugt einstückig, verbunden, jedoch von diesem entfernt gelegen ist, in einem von der Rückenformation (22) entfernt gelegenen Bereich, vorzugsweise im zweiten Verbindungsbereich (48), des Lagerbocks (10) mit diesem verbunden ist.

8. Lagerbock (10) nach einem der vorhergehenden Ansprüche,
**dadurch gekennzeichnet, dass** der den Anlageabschnitt (44, 46) aufweisende Abstützbereich (34) des Anlagebauteils (36) längs der Abstandsachse (A) federnd ausgebildet ist, insbesondere eine längs der Abstandsachse (A) verlaufende Basis (34a) aufweist, von welcher ein einen Anlageabschnitt (44, 46) aufweisender Schenkel (34b, 34c) absteht, vorzugsweise von welcher zwei längs der Abstandsachse (A) mit Abstand voneinander angeordnete Schenkel (34b, 34c) abstehen, von welchen jeder einen Anlageabschnitt (44, 46) aufweist, wobei jeder Anlageabschnitt (44, 46) einer anderen Lagerbockwange (12, 14) gegenüberliegt oder an dieser anliegt.

9. Lagerbock (10) nach einem der vorhergehenden Ansprüche,
**dadurch gekennzeichnet, dass** das Anlagebauteil (36) zwei in längs der Abstandsachse (A) in entgegengesetzte Richtungen weisende Anlageabschnitte (44, 46) aufweist, von welchen jeder einer anderen Lagerbockwange (12, 14) gegenüberliegt oder an dieser anliegt, besonders bevorzugt unter Druckvorspannung durch die Lagerbockwangen (12, 14) an diesen anliegt.

10. Lagerbock (10) nach einem der vorhergehenden Ansprüche,
**dadurch gekennzeichnet, dass** der Abstützbereich (34), vorzugsweise das Anlagebauteil (36), besonders bevorzugt der Lagerbock (10) bezüglich einer zur Abstandsachse (A) orthogonalen Symmetrieebene (S) spiegelsymmetrisch ausgebildet ist.

11. Lagerbock (10) nach einem der vorhergehenden Ansprüche,
**dadurch gekennzeichnet, dass** sowohl der erste (20) als auch der zweite Verbindungsbereich (48) wenigstens abschnittsweise in jeweils einer Ebene gelegen sind, wobei die beiden Ebenen einen Winkel von 75° bis 110°, vorzugsweise von 85° bis 105°, besonders bevorzugt von etwa 90° einschließen.

12. Lagerungsstruktur (18), umfassend einen Lagerbock (10) nach einem der vorhergehenden Ansprüche und einen Fahrzeugträger (16), wobei der Lagerbock (10) im ersten (20) und im zweiten Verbindungsbereich (48) jeweils mit dem Fahrzeugträger (16) verbunden ist.

13. Lagerungsstruktur (18) nach Anspruch 12,
**dadurch gekennzeichnet, dass** der Fahrzeugträger (16) Teil der Verbindungsformation (50) ist.

14. Lagerungsstruktur (18) nach Anspruch 12 oder 13,
**dadurch gekennzeichnet, dass** die Rückenformation (22) unter Zwischenanordnung eines gesonderten Supportbauteils (30) mit dem Fahrzeugträger (16) verbunden ist.

15. Lagerungsstruktur (18) nach Anspruch 14,
**dadurch gekennzeichnet, dass** die Rückenformation (22) und der Abstützbereich (34) des Anlagebauteils (36) durch gemeinsame Verbindungsmittel (32), insbesondere Schrauben (32) oder Niete, mit dem Supportbauteil (30) verbunden sind.

## Claims

1. A mounting bracket (10) for retaining a rigid-axle trailing arm on a vehicle support (16), encompassing two mounting-bracket sidewalls (12, 14) which are located remotely from one another along a spacing axis (A) and between which a passthrough configuration (64) extending along the spacing axis (A) proceeds, which configuration is embodied, in the completely installed state of the mounting bracket (10), to pass through an attachment eye, received between the mounting-bracket sidewalls (12, 14), of the rigid-axle trailing arm; the mounting-bracket sidewalls (12, 14) being connected to one another, in a first connection region (20), by a spine configuration (22) located remotely from the passthrough configuration (64) in a first direction (R1) orthogonal to the spacing axis (A); and the mounting-bracket sidewalls (12, 14) being connected to one another, in a second connection region (48) different from the first, by a connection configuration (50) located remotely from the passthrough configuration (64) in a second direction (R2) that is orthogonal to the spacing direction (A) and is different from the first direction (R1); a reception space (62) of the mounting bracket (10), which space is delimited by the mounting-bracket sidewalls (12, 14), the spine configuration (22), and the connection configuration (50) and is passed through by the passthrough configuration (64), being open for introduction of the attachment eye from an introduction region of the mounting bracket (10) which is located remotely both from the spine configuration (22) and from the connection configuration (50),
**characterized in that** an abutment component (36) having at least one abutment portion (44, 46) is arranged in the region between the passthrough configuration (64) and the spine configuration (22); the at least one abutment portion (44, 46) being unconnectedly located oppositely from, or abutting against, a mounting-bracket sidewall (12 or 14) in a wall portion facing toward the respective other mounting-bracket sidewall (14 or 12) in such a way that only a compressive force having an effect along the spacing axis (A) is transferrable between the mounting-bracket sidewall (12, 14) and abutment portion (44, 46); a bracing region (34), comprising the abutment portion (44, 46), of the abutment component (36) being connected intentionally detachably to the spine configuration (22).

2. The mounting bracket (10) according to Claim 1,
**characterized in that** the at least one abutment portion (44, 46) proceeds parallel to the spine configuration (22).

3. The mounting bracket (10) according to Claim 1 or 2,
**characterized in that** the at least one abutment portion (44, 46) constitutes an edge portion (40, 42) of the abutment component (36).

4. The mounting bracket (10) according to one of the preceding claims,
**characterized in that** at least one bracing region (34), comprising the abutment portion (44, 46), of the abutment component (36) is embodied in planar fashion, in particular is flat, preferably is a planar sheet-metal component.

5. The mounting bracket (10) according to one of the preceding claims,
**characterized in that** a bracing region (34), comprising the abutment portion (44, 46), of the abutment component (36) is arranged along the spine configuration (22) with a spacing therefrom.

6. The mounting bracket (10) according to one of the preceding claims,
**characterized in that** the bracing region (34), comprising the abutment portion (44, 46), of the abutment component (36) is connected to the spine configuration by thread-joining.

7. The mounting bracket (10) according to Claim 6,
**characterized in that** a fastening region (52) of the abutment component (36), which is connected, preferably in one piece, to the bracing region (34) but is located remotely therefrom, is connected to the mounting bracket (10) in a region thereof located remotely from the spine configuration (22), preferably in the second connection region (48).

8. The mounting bracket (10) according to one of the preceding claims,
**characterized in that** the bracing region (34), comprising the abutment portion (44, 46), of the abutment component (36) is embodied resiliently along the spacing axis (A), in particular comprises a base (34a), proceeding along the spacing axis (A), from which a limb (34b, 34c) comprising an abutment portion (44, 46) projects, preferably from which two limbs (34b, 34c) arranged with a spacing from one another along the spacing axis (A) project, each of which comprises an abutment portion (44, 46), each abutment portion (44, 46) being located oppositely from, or abutting against, a different mounting-bracket sidewall (12, 14).

9. The mounting bracket (10) according to one of the preceding claims,
**characterized in that** the abutment component (36) comprises two abutment portions (44, 46) facing in opposite directions along the spacing axis (A), each of which is located oppositely from, or abuts against, a different mounting-bracket sidewall (12, 14), particularly preferably abuts against the mounting-bracket sidewalls (12, 14) under a compressive preload therefrom.

10. The mounting bracket (10) according to one of the preceding claims,
**characterized in that** the bracing region (34), preferably the abutment component (36), particularly preferably the mounting bracket (10), is embodied mirror-symmetrically with respect to a plane of symmetry (S) orthogonal to the spacing axis (A).

11. The mounting bracket (10) according to one of the preceding claims,
**characterized in that** both the first (20) and the second connection region (48) are located at least in portions in a respective plane, the two planes enclosing an angle from 75° to 110°, preferably from 85° to 105°, particularly preferably of approximately 90°.

12. A mounting structure (18) encompassing a mounting bracket (10) according to one of the preceding claims, and encompassing a vehicle carrier (16), the mounting bracket (10) being connected to the vehicle carrier (16) respectively in the first (20) and the second connection region (48).

13. The mounting structure (18) according to Claim 12,
**characterized in that** the vehicle carrier (16) is part of the connection configuration (50).

14. The mounting structure (18) according to Claim 12 or 13,
**characterized in that** the spine configuration (22) is connected to the vehicle carrier (16) with interposition of a separate support component (30).

15. The mounting structure (18) according to Claim 14,
**characterized in that** the spine configuration (22) and the bracing region (34) of the abutment component (36) are connected to the support component (30) by shared connecting means (32), in particular bolts (32) or rivets.

## Revendications

1. Support de palier (10) pour la fixation d'un bras oscillant longitudinal à arbre rigide sur un support de véhicule (16), comprenant deux joues de support de palier (12, 14) qui sont espacées l'une de l'autre le long d'un axe d'espacement (A) et entre lesquelles s'étend une formation de passage (64) s'étendant le long de l'axe d'espacement (A), qui est adaptée, à l'état complètement assemblé du support de palier (10), pour passer à travers un œillet de fixation du bras oscillant longitudinal à essieu rigide reçue entre les joues du support de palier (12, 14), dans lequel les joues du support de palier (12, 14) sont reliés entre elles dans une première zone de liaison (20) par une formation arrière (22) située à distance de la formation de passage (64) dans une première direction (R1) orthogonale à l'axe d'espacement (A), et dans lequel les joues du support de palier (12, 14) sont reliés entre elles dans une deuxième zone de liaison (48) différente de la première par une formation de liaison (50) située à distance de la formation de passage (64) dans une deuxième direction (R2) orthogonale à la direction de l'axe d'espacement (A) et différente de la première direction (R1), dans lequel un espace de réception du support de palier (10) délimité par les joues du support de palier (12, 14), la formation arrière (22) et la formation de liaison (50), et traversé par la formation de passage (64), est ouvert pour l'insertion de l'œillet de fixation à partir d'une zone d'insertion du support de palier (10) éloignée à la fois de la formation arrière (22) et de la formation de liaison (50),
**caractérisé en ce que** dans la zone entre la formation de passage (64) et la formation arrière (22), un élément de butée (36) est arrangé avec au moins une section de butée (44, 46), dans laquelle ladite au moins une section de butée (44, 46) se trouve en face d'une joue de palier (12 ou 14) dans une section de paroi dirigée vers l'autre joue de palier respective (14 ou 12) d'une manière non connectée ou vient en butée sur celle-ci de telle sorte qu'entre la joue de palier (12, 14) et la section de butée (44, 46), une seule force de compression peut être transmise avec action le long de l'axe d'espacement (A), dans lequel une zone d'appui (34) de l'élément de butée (44, 46) comprenant la section de butée (44, 46) est reliée à la formation arrière (22) de manière détachable comme prévu.

2. Support de palier (10) selon la revendication 1,
**caractérisé en ce que** ladite au moins une section de butée (36) s'étend parallèlement à la formation arrière (22).

3. Support de palier (10) selon la revendication 1 ou 2,
**caractérisé en ce que** ladite au moins une section de butée (44, 46) forme une section de bord (40, 42) de l'élément de butée (36).

4. Support de palier (10) selon l'une des revendications précédentes,
**caractérisé en ce qu'**au moins une zone d'appui (34) de l'élément de butée (36) comprenant la section de butée (44, 46) est de construction plate, en particulier plane, de préférence une pièce de tôle plate.

5. Support de palier (10) selon l'une des revendications précédentes,
**caractérisé en ce qu'**une zone d'appui (34) de l'élément de butée (36) comprenant la section de butée (44, 46) est disposée le long de la formation arrière (22) à distance de celle-ci.

6. Support de palier (10) selon l'une des revendications précédentes,
**caractérisé en ce que** la zone d'appui (34) de l'élément de butée (36) comprenant la section de butée (44, 46) est reliée à la formation arrière (22) par vissage.

7. Support de palier (10) selon la revendication 6,
**caractérisé en ce qu'**une zone de fixation (52) de l'élément de butée (36) qui est reliée à la zone de support (34), de préférence d'une seule pièce, mais qui est située à l'opposé de celle-ci, est reliée au support de palier (10) dans une zone éloignée de la formation arrière (22), de préférence dans la deuxième zone de liaison (48) du support de palier (10).

8. Support de palier (10) selon l'une des revendications précédentes,
**caractérisé en ce que** la zone d'appui (34) de l'élément de butée (36) comprenant la section de butée (44, 46) est formée de manière élastique le long de l'axe d'espacement (A), comprend en particulier une base (34a) s'étendant le long de l'axe d'espacement (A), à partir de laquelle fait saillie une branche (34b, 34c) comprenant une section de butée (44, 46), de préférence à partir de laquelle font saillie deux branches (34b, 34c) disposées à distance l'une de l'autre le long de l'axe d'espacement (A), dont chacune présente une section de butée (44, 46), dans lequel chaque section de butée (44, 46) est opposée à une autre joue de palier (12, 14) ou s'appuie sur celle-ci.

9. Support de palier (10) selon l'une des revendications précédentes,
**caractérisé en ce que** l'élément de butée (36) présente deux sections de butée (44, 46) orientées en sens inverse le long de l'axe d'espacement (A), dont chacune est opposée à une autre joue de support de support (12, 14) ou s'appuie sur celle-ci, de préférence en particulier s'appuie sur celle-ci sous précontrainte de compression par les joues de support de support (12, 14).

10. Support de palier (10) selon l'une des revendications précédentes,
**caractérisé en ce que** la zone d'appui (34), de préférence l'élément de butée (36), en particulier de préférence le support de palier (10), est réalisée de manière symétrique par rapport à un plan de symétrie (S) orthogonal à l'axe d'espacement (A).

11. Support de palier (10) selon l'une des revendications précédentes,
**caractérisé en ce que** la première (20) et la deuxième zone de liaison (48) sont toutes deux situées au moins par sections dans un plan chacune, les deux plans formant un angle de 75° à 110°, de préférence de 85° à 105°, de manière particulièrement préférée d'environ 90°.

12. Support de palier (18), comprenant un support de palier (10) selon l'une des revendications précédentes et un support de véhicule (16), dans lequel le support de palier (10) est relié au support de véhicule (16) dans la première (20) et dans la deuxième zone de liaison (48) respectivement.

13. Support de palier (18) selon la revendication 12,
**caractérisée en ce que** le support de véhicule (16) fait partie de la formation de liaison (50).

14. Support de palier (18) selon la revendication 12 ou 13,
**caractérisée en ce que** la formation du dos (22) est reliée au support de véhicule (16) avec l'interposition d'un élément de support séparé (30).

15. Support de palier (18) selon la revendication 14,
**caractérisée en ce que** la formation arrière (22) et la zone de support (34) de l'élément de butée (36) sont reliées à l'élément de support (30) par des moyens de liaison communs (32), en particulier des vis (32) ou des rivets.
